# EUROPÄISCHE PATENTANMELDUNG

(11) **EP 2 407 659 A2**
(43) Veröffentlichungstag der Anmeldung: **18.01.2012**
(21) Anmeldenummer: 11005553.0
(22) Anmeldetag: 06.07.2011
(51) Int. Cl.: F02K 1/34, F02K 1/44, F02K 1/82

(54) **Gasturbinenabgaskonus**

(30) Priorität: 12.07.2010 DE 102010026834
(71) Anmelder: Rolls-Royce Deutschland & Co. KG, 158257 Blankenfelde-Mahlow (DE)
(72) Erfinder: Todorovic, Predrag, 10437 Berlin (DE)
(74) Vertreter: Weber, Joachim

(57) **Zusammenfassung**

Die Erfindung bezieht sich auf einen Gasturbinenabgaskonus mit einem konusförmigen, in Strömungsrichtung geschlossenen Mantelkonus 1, wobei in dem Mantelkonus 1 über zumindest einen Teil der Länge des Abgaskonus ein Innenkonus 2 angeordnet ist, welcher mit dem Mantelkonus 1 über zumindest eine gewendelte Trennwand 3 verbunden ist, wobei ein zwischen dem Mantelkonus 1 und dem Innenkonus 2 gebildeter Zwischenraum 4 an einer Einströmseite mit Eintrittsöffnungen 5 verbunden ist und sich an einer Austrittsseite 6 zum Innenraum 7 des Mantelkonus 1 öffnet, wobei benachbart zu der Austrittsseite 6 des Zwischenraums 4 in dem Mantelkonus 1 ein Dämpfungselement 8 angeordnet ist.

## Beschreibung

Die Erfindung bezieht sich auf einen Gasturbinenabgaskonus, welcher am Ausströmbereich einer Gasturbine angeordnet ist.

Bei Gasturbinen für Flugzeugtriebwerke ist es erforderlich, das Geräuschniveau zu senken. Zu diesem Zweck sind auch unterschiedliche Maßnahmen bekannt, um das aus einer Abströmdüse stromab der Turbine austretende Gasstrahlgeräusch zu minimieren.

Aus dem Stand der Technik ist es bekannt, niedrige Frequenzen, die sich insbesondere bei Triebwerken mit Magerverbrennung ergeben, zu dämpfen. Eine Geräuschdämpfung erfolgt dabei über einen Helmholtz-Resonator. Es ist bekannt, in dem Anströmbereich des Abgaskonus einen derartigen Helmholtz-Resonator auszubilden, während der stromab liegende Endbereich des Abgaskonus lediglich als geometrischer Körper ausgebildet ist. Bekannte Helmholtz-Resonatoren werden dabei als System von radialen Wänden und inneren zylindrischen Führungen ausgestaltet und in Abhängigkeit von den Frequenzen dimensioniert.

Bei den bekannten Konstruktionen erweist es sich als nachteilig, dass diese im Hinblick auf die auftretenden Gastemperaturen mechanisch stark belastet sind und deshalb Verstärkungselemente erfordern. Dies führt zu einer ein relativ hohes Gewicht aufweisenden Konstruktion, auch bedingt durch unterschiedliche Wandungen und Versteifungselemente. Zusätzlich ergibt sich eine sehr aufwendige Fertigung. Die Herstellungskosten werden auch noch durch interne Akustik-Maßnahmen (Perforationen oder Ähnliches) erhöht. Auch die axiale Länge eines derartigen Resonators erfordert einen erheblichen Bauraum und bringt zusätzliches Gewicht.

Der Erfindung liegt die Aufgabe zugrunde, einen Gasturbinenabgaskonus der eingangs beschriebenen Art zu schaffen, welcher bei einfachem Aufbau und hoher Dämpfungswirkung kostengünstig herstellbar ist und ein geringes Gewicht aufweist.

Erfindungsgemäß wird die Aufgabe durch die Merkmalskombination des Anspruchs 1 gelöst, die Unteransprüche zeigen weitere vorteilhafte Ausgestaltungen der Erfindung. Der erfindungsgemäße Abgaskonus weist zunächst einen äußeren Mantelkonus auf, welcher in Strömungsrichtung im Wesentlichen geschlossen ist. Erfindungsgemäß ist vorgesehen, dass zumindest über einen Teil der Länge des Abgaskonus sich innerhalb des Mantelkonus ein Innenkonus erstreckt, welcher mit dem Mantelkonus über zumindest eine gewendelte Trennwand verbunden ist. Es ergibt sich somit eine DoppelKonus-Konstruktion mit einem Innenraum zwischen dem Mantelkonus und dem Innenkonus. In diesem Zwischenraum erstreckt sich die zumindest eine gewendelte Trennwand. Der Innenraum ist an einer Einströmseite mit Eintrittsöffnungen verbunden, durch welche Schallwellen eintreten können. Diese breiten sich in dem Zwischenraum aus. Durch die gewendelte Trennwand ergibt sich eine sehr erhebliche Lauflänge. Die axiale Abmessung des erfindungsgemäßen Abgaskonus kann somit sehr gering ausgebildet werden, da die für das Helmholtz-Resonator-Prinzip erforderliche Lauflänge für die Schallwellen durch die gewendelte Trennwand bereitgestellt wird.

An der Austrittsseite öffnet sich der Zwischenraum zu einem Innenraum des Mantelkonus, wobei benachbart zu der Austrittsseite, durch welche die Schallwellen in den Innenraum des Mantelkonus gelangen, in dem Mantelkonus ein Dämpfungselement angeordnet ist.

In besonders günstiger Ausgestaltung der Erfindung ist vorgesehen, dass mehrere spiralförmig ausgebildete Trennwände vorgesehen sind.

Durch die erfindungsgemäße Ausgestaltung des Abgaskonus kann ein Helmholtz-Resonator gebildet werden, der insbesondere zur Reduzierung niedriger Geräuschfrequenzen, die sich durch eine Magerverbrennung ergeben, geeignet ist.

Die Schallwellen gelangen somit durch die Eintrittsöffnungen in den spiralförmig ausgebildet Helmholtz-Resonator. Durch die spiralförmigen, gewendelten Trennwände (bevorzugt sind mehrere derartige Trennwände vorgesehen), ergibt sich die geforderte Länge des Helmholtz-Resonators, ohne dass die Baulänge des Abgaskonus erhöht werden muss.

Die gewendelten oder spiralförmigen Trennwände sind in einem Winkel zu der lokalen Radialrichtung der Mantelkonus angeordnet. Die Trennwände sind bevorzugt mit dem Mantelkonus verschweißt, während sie mit dem Innenkonus über Blindnieten verbunden werden können.

Um thermische Ausdehnungen zu kompensieren, ist somit die gewendelte Trennwand bestens geeignet, da sich bei thermischer Ausdehnung hauptsächlich eine Verschiebung in Axialrichtung, nicht jedoch in Radialrichtung ergibt. Hierdurch können die Belastungen des Mantelkonus erheblich reduziert werden. Die gewendelten Trennwände verdrehen sich somit zusammen mit dem Innenkonus relativ zu dem Außenkonus.

Erfindungsgemäß ergibt sich somit eine stabile, feste Konstruktion, deren Anfälligkeit für thermische Belastungen gering ist. Hierdurch ist es möglich, den Mantelkonus dünner und somit leichter auszubilden.

Das erfindungsgemäß vorgesehene Dämpfungselement, welches bevorzugterweise plattenförmig ausgebildet ist, bevorzugterweise in einer Wabenstruktur, ist bevorzugt über einen Faltenbalg mit dem Mantelkonus verbunden, so dass auch hier eine Vermeidung von thermischen Belastungen erfolgt.

Es ergibt sich somit eine erhebliche Erhöhung der mechanischen Festigkeit, verbunden mit einer reduzierten Baugröße und einer verbesserten Dämpfungswirkung.

In günstiger Ausgestaltung der Erfindung ist vorgesehen, dass im Anströmbereich des Abgaskonus ein zweites Dämpfungselement im Innenraum des Innenkonus angeordnet ist. Dieses ist bevorzugterweise ebenfalls über einen Faltenbalg gelagert, um die thermische Ausdehnung oder Kontraktion zu kompensieren.

Im Folgenden wird die Erfindung anhand von Ausführungsbeispielen in Verbindung mit der Zeichnung beschrieben. Dabei zeigt:

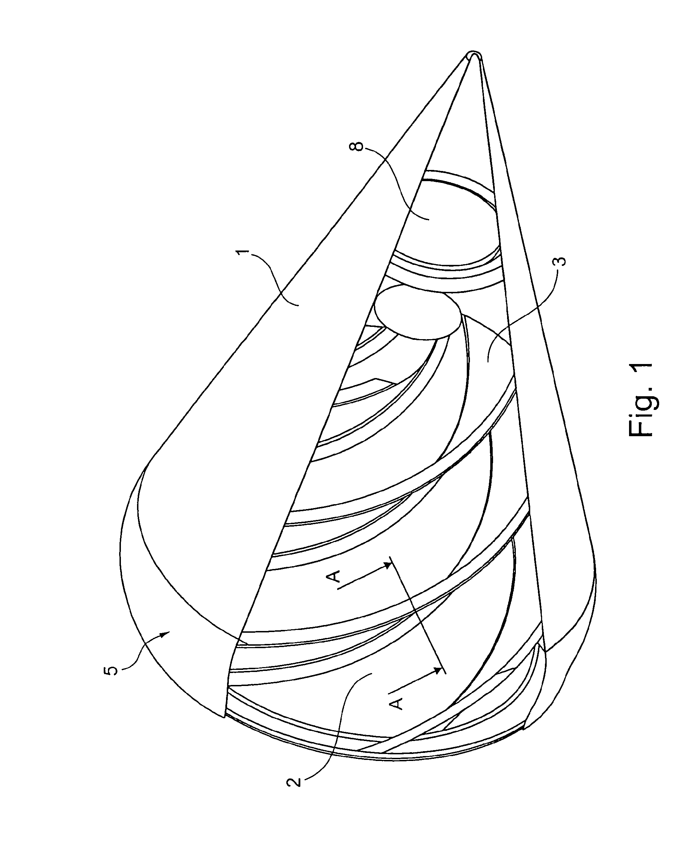

- Fig.1: eine perspektivische Teil-Schnittansicht eines erfindungsgemäßen Abgaskonus,

- Fig. 2: eine Axial-Schnittansicht durch das Ausführungsbeispiel der Fig. 1, und
- Fig. 3: eine Schnittansicht gemäß A-A von Fig. 1.

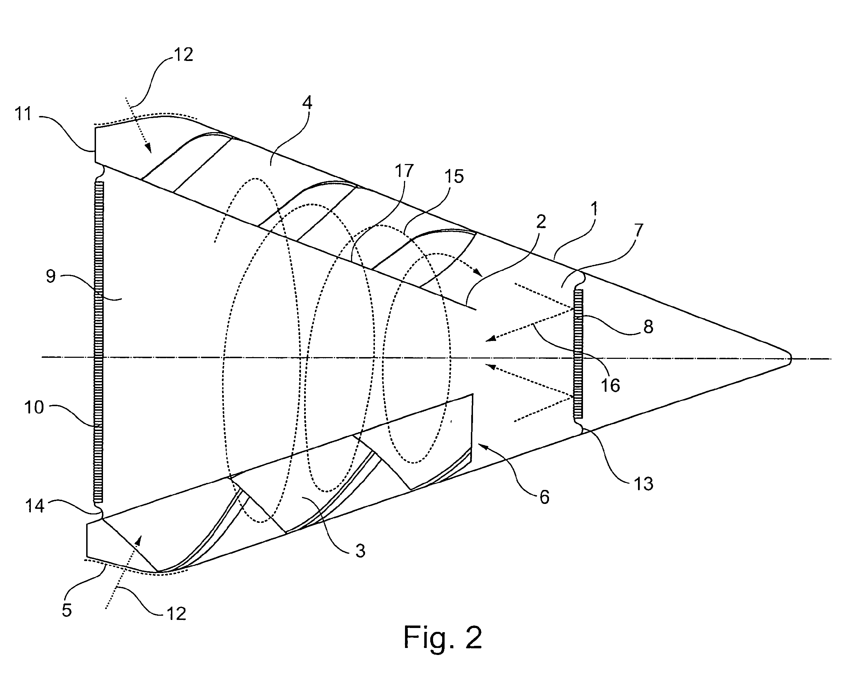

Der erfindungsgemäße Abgaskonus umfasst einen Mantelkonus 1, der in Strömungsrichtung verjüngt ausgebildet ist, so wie dies aus dem Stand der Technik bekannt ist. Die Anströmung gemäß Fig. 2 erfolgt somit von links, der aus einer Turbine einer Fluggasturbine austretende Gasstrahl ist dabei nicht dargestellt.

An seinem Anströmbereich ist der Mantelkonus 5 mit Eintrittsöffnungen 5 (Perforation) versehen, durch welche die durch die Abgasströmung erzeugten Schallwellen 12 in den Mantelkonus 1 eintreten können. Parallel zu dem Mantelkonus 1 ist ein Innenkonus 2 vorgesehen, der sich über einen Teil der axialen Länge des Mantelkonus 1 erstreckt. Der Innenkonus 2 ist mittels gewendelter oder spiralförmiger Trennwände 3 mit dem Mantelkonus 1 verbunden. Dabei ist bevorzugt vorgesehen, dass die Verbindung zwischen den Trennwänden 3 und dem Mantelkonus 1 durch Verschweißen erfolgt, während eine Verbindung der Trennwände 3 mit dem Innenkonus 2 über Nieten oder Ähnliches erfolgen kann.

Die Fig. 2 zeigt einen zwischen dem Mantelkonus 1 und dem Innenkonus 2 ausgebildeten Zwischenraum 4. Bedingt durch die wendelartige Konstruktion der Trennwände ergibt sich eine effektive Länge 15 der zwischen den Trennwänden 3 in dem Zwischenraum 4 gebildeten Spiralkammer. Diese effektive Länge 15 ermöglicht die Ausbildung eines effektiv wirkenden Helmholtz-Resonators, insbesondere zusammen mit dem λ/4-Effekt des nachfolgend beschriebenen Dämpfungselements 8.

An einer Austrittsseite 6 des Zwischenraums 4 treten die in Fig. 2 gewendelt dargestellten Schallwellen aus und gelangen in einen Innenraum 7 des Mantelkonus 1. Die Schallwellen treffen dabei auf ein flaches Dämpfungselement 8, welches mit einer Wabenstruktur versehen sein kann und in Form eines λ/4-Resonators ausgebildet sein kann.

Die Fig. 2 zeigt reflektierte Schallwellen 16, die von dem Dämpfungselement 8 gegebenenfalls noch abgegeben werden. Diese reflektierten Schallwellen 16 gelangen in einen Innenraum 9 des Innenkonus 2 und treffen auf ein plattenförmiges Dämpfungselement 10, welches ebenfalls als λ/4-Dämpfer ausgebildet ist.

Das Dämpfungselement 10 ist über einen Faltenbalg 14 mit dem Innenkonus 2 verbunden und an diesem gelagert. Analog hierzu ist das Dämpfungselement 8 über einen Faltenbalg 13 an dem Mantelkonus 1 gelagert.

Eine Lagerung und Befestigung des gesamten Abgaskonus erfolgt über einen ringförmigen Befestigungsflansch 11. Dieser ist bevorzugterweise fest mit dem Mantelkonus 1 verbunden, während sich am Übergang zu dem Innenkonus 2 ein Ausdehnungsspalt befinden kann, um thermische Belastungen durch Kontraktion oder Expansion zu kompensieren.

Die Fig. 2 zeigt mit dem Bezugszeichen 17 eine Winkelbezugslinie, aus welcher sich ergibt, dass die Trennwand mit einem Winkel von 5° bis 15°, bevorzugt 10°, zu der Bezugslinie, welche senkrecht auf die Mantelfläche des Mantelkonus 1 und des zu diesem parallelen Innenkonus 2 ausgerichtet ist, angeordnet ist.

Die beiden Dämpfungselemente 8, 10 sind jeweils als flache Hochfrequenzdämpfer ausgebildet.

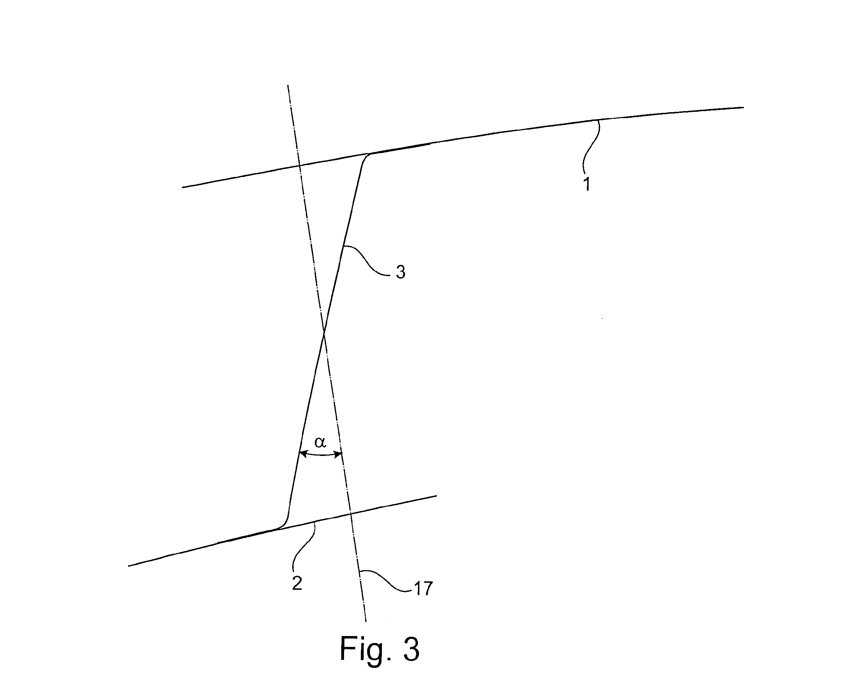

Die Figur 3 zeigt eine Schnittansicht mit Darstellung der Neigung der Trennwand im Winkel α zur Radialrichtung 17.

### Bezugszeichenliste

- 1: Mantelkonus
- 2: Innenkonus
- 3: Trennwand
- 4: Zwischenraum
- 5: Eintrittsöffnung
- 6: Austrittsseite
- 7: Innenraum des Mantelkonus 1
- 8: Dämpfungselement
- 9: Innenraum des Innenkonus 2
- 10: Dämpfungselement
- 11: Befestigungsflansch
- 12: Schallwelle
- 13, 14: Faltenbalg
- 15: effektive Länge
- 16: reflektierte Schallwelle
- 17: Radialrichtung

## Patentansprüche

1. Gasturbinenabgaskonus mit einem konusförmigen, in Strömungsrichtung geschlossenen Mantelkonus (1), wobei in dem Mantelkonus (1) über zumindest einen Teil der Länge des Abgaskonus ein Innenkonus (2) angeordnet ist, welcher mit dem Mantelkonus (1) über zumindest eine gewendelte Trennwand (3) verbunden ist, wobei ein zwischen dem Mantelkonus (1) und dem Innenkonus (2) gebildeter Zwischenraum (4) an einer Einströmseite mit Eintrittsöffnungen (5) verbunden ist und sich an einer Austrittsseite (6) zum Innenraum (7) des Mantelkonus (1) öffnet, wobei benachbart zu der Austrittsseite (6) des Zwischenraums (4) in dem Mantelkonus (1) ein Dämpfungselement (8) angeordnet ist.

2. Gasturbinenabgaskonus nach Anspruch 1, **dadurch gekennzeichnet, dass** in dem Zwischenraum (4) mehrere spiralförmig ausgebildete Trennwände (3) angeordnet sind.

3. Gasturbinenabgaskonus nach Anspruch 1 oder 2, **dadurch gekennzeichnet, dass** im Anströmbereich des Mantelkonus (1) Eintrittsöffnungen (5) in Form einer Perforierung ausgebildet sind.

4. Gasturbinenabgaskonus nach einem der Ansprüche 1 bis 3, **dadurch gekennzeichnet, dass** in dem Innenraum (9) des Innenkonus (2) an der Anströmseite ein zweites Dämpfungselement (10) angeordnet ist.

5. Gasturbinenabgaskonus nach einem der Ansprüche 1 bis 4, **dadurch gekennzeichnet, dass** das Dämpfungselement (8, 10) plattenförmig, bevorzugt mit einer Wabenstruktur, bevorzugt als λ/4-Dämpfer, ausgebildet ist.

6. Gasturbinenabgaskonus nach einem der Ansprüche 1 bis 5, **dadurch gekennzeichnet, dass** die wendelförmige Trennwand (3) mit einem Winkel von 5° bis 15° zu einer Senkrechten auf der Mantelfläche angeordnet ist.

7. Gasturbinenabgaskonus nach einem der Ansprüche 1 bis 6, **dadurch gekennzeichnet, dass** das Dämpfungselement (8, 10) als Hochfrequenzdämpfer ausgebildet ist.

8. Gasturbinenabgaskonus nach einem der Ansprüche 1 bis 7, **dadurch gekennzeichnet, dass** der Innenkonus (2) über die zumindest eine Trennwand (3) an dem Mantelkonus (1) gelagert ist.

9. Gasturbinenabgaskonus nach einem der Ansprüche 1 bis 8, **dadurch gekennzeichnet, dass** am anströmseitigen Endbereich ein ringförmiger, mit dem Mantelkonus (1) verbundener Befestigungsflansch (11) ausgebildet ist.

10. Gasturbinenabgaskonus nach einem der Ansprüche 1 bis 9, **dadurch gekennzeichnet, dass** der Innenbereich des Abgaskonus nur über die Eintrittsöffnungen (5) zur Umgebung geöffnet ist.
